# EUROPÄISCHE PATENTSCHRIFT

(11) **EP 3 140 632 B1**
(45) Veröffentlichungstag und Bekanntmachung des Hinweises auf die Patenterteilung: **14.08.2019**
(21) Anmeldenummer: 15711455.4
(22) Anmeldetag: 13.03.2015
(51) Int. Cl.: G01N 15/06, G01N 27/04, G01N 15/00

(54) **SENSOR ZUR DETEKTION VON TEILCHEN**
SENSOR FOR DETECTING PARTICLES
CAPTEUR POUR LA DÉTECTION DE PARTICULES

(30) Priorität: 09.05.2014 DE 102014208736
(43) Veröffentlichungstag der Anmeldung: 15.03.2017
(73) Patentinhaber: Robert Bosch GmbH, 70442 Stuttgart (DE)
(72) Erfinder: ROESCH, Sabine, 71254 Ditzingen (DE)
(86) Internationale Anmeldenummer: PCT/EP2015/055267
(87) Internationale Veröffentlichungsnummer: WO 2015/169486

(56) Entgegenhaltungen:
- DE-A1-102006 032 741
- DE-A1-102006 043 092
- DE-A1-102007 046 099
- DE-A1-102013 210 547
- US-A1- 2012 103 057

## Beschreibung

### Stand der Technik

Aus dem Stand der Technik sind zahlreiche Verfahren und Vorrichtungen zur Detektion von Teilchen, wie beispielsweise Ruß- oder Staubpartikeln, bekannt.

Die Erfindung wird im Folgenden, ohne Beschränkung weiterer Ausführungsformen und -anwendungen, insbesondere unter Bezugnahme auf Sensoren zur Detektion von Teilchen, insbesondere von Rußpartikeln in einem Abgasstrom einer Brennkraftmaschine, beschrieben.

Es ist aus der Praxis bekannt, mittels zwei Elektroden, die auf einer Keramik angeordnet sind, eine Konzentration von Teilchen, wie beispielsweise Ruß- oder Staubpartikeln, in einem Abgas zu messen. Dies kann beispielsweise durch eine Messung des elektrischen Widerstands des die beiden Elektroden trennenden keramischen Werkstoffs erfolgen. Genauer wird der elektrische Strom gemessen, der beim Anlegen einer elektrischen Spannung an die Elektroden zwischen diesen fließt. Die Rußpartikel lagern sich aufgrund elektrostatischer Kräfte zwischen den Elektroden ab und bilden mit der Zeit elektrisch leitfähige Brücken zwischen den Elektroden. Je mehr dieser Brücken vorhanden sind, umso mehr steigt der gemessene Strom. Es bildet sich somit ein zunehmender Kurzschluss der Elektroden. Die Dokumente DE102007046099, US 2012/103057, DE102006032741 und DE102006043092 offenbaren derartige Sensoren.

Derartige Sensoren werden beispielsweise in einem Abgasstrang einer Brennkraftmaschine, wie beispielsweise einem Verbrennungsmotor der Dieselbauart eingesetzt. Üblicherweise befinden sich diese Sensoren stromabwärts des Auslassventils bzw. des Rußpartikelfilters.

Trotz der zahlreichen Vorteile der aus dem Stand der Technik bekannten Vorrichtungen zur Detektion von Teilchen beinhalten diese noch Verbesserungspotenzial. So sind die Elektroden üblicherweise mit Zuleitungen elektrisch verbunden, die aus einem Material hergestellt sind, das Platin umfasst. Die Zuleitungen sind von einer keramischen Schicht bedeckt. Nach einer bestimmten Zeit wird der Sensor durch Eigenbeheizung regeneriert und der angelagerte Ruß verbrannt. Dies wird durch einen integrierten Heizer realisiert. Es kann möglicherweise zur unerwünschten Einlagerung von Feuchte im Bereich der platinhaltigen Zuleitungen kommen.

### Offenbarung der Erfindung

Es wird daher ein Sensor zur Detektion von Teilchen, insbesondere von Rußpartikeln vorgeschlagen, welcher die Einlagerung von Feuchte minimieren kann und der insbesondere im Hinblick auf die Herstellbarkeit verbessert ist.

Ein erfindungsgemäßer Sensor zur Detektion von Teilchen, insbesondere von Rußpartikeln, umfasst mindestens zwei Messelektroden. Die zwei Messelektroden sind auf einer ersten Schicht aus einem elektrisch isolierenden Material angeordnet. Der Sensor umfasst weiterhin mindestens zwei Zuleitungen zu den Messelektroden. Dabei ist jeweils eine Zuleitung einer Messelektrode zugeordnet. Die Zuleitungen sind mit den Messelektroden jeweils in einem Verbindungsbereich verbunden. Mit anderen Worten ist jeweils eine Zuleitung mit einer Messelektrode verbunden. Der Verbindungsbereich wird von einem hinteren Abschnitt der Messelektroden und einem vorderen Abschnitt der Zuleitungen gebildet, wobei der hintere Abschnitt und der vordere Abschnitt überlappen. Die Zuleitungen sind von mindestens einer zweiten Schicht aus einem elektrisch isolierenden Material derart bedeckt, dass der Verbindungsbereich von der zweiten Schicht aus einem elektrisch isolierenden Material frei gelassen ist. Mit anderen Worten ist die zweite Schicht aus einem elektrisch isolierenden Material derart auf die Zuleitung aufgebracht, dass der Verbindungsbereich mit den Messelektroden nicht von der zweiten Schicht bedeckt ist.

Die erste Schicht aus einem elektrisch isolierenden Material und/oder die zweite Schicht aus einem elektrisch isolierenden Material können zumindest teilweise aus einem keramischen Material hergestellt sein. Die Zuleitungen können mit Ausnahme des Verbindungsbereichs vollständig von der zweiten Schicht aus einem elektrisch isolierenden Material bedeckt sein. Der Verbindungsbereich kann auf der ersten Schicht aus einem elektrisch isolierenden Material angeordnet sein. Der Abschnitt der Zuleitungen kann auf der ersten Schicht aus einem elektrisch isolierenden Material sein und der Abschnitt der Messelektroden kann auf dem Abschnitt der Zuleitungen angeordnet sein. Die Zuleitungen können zumindest teilweise auf einer dritten Schicht aus einem elektrisch isolierenden oder leitfähigen Material angeordnet sein. Die erste Schicht aus einem elektrisch isolierenden Material kann auf der dritten Schicht aus einem elektrisch isolierenden Material angeordnet sein. Die Zuleitungen können zwischen der zweiten Schicht aus einem elektrisch isolierenden Material und der dritten Schicht aus einem elektrisch isolierenden Material eingebettet sein. Die dritte Schicht aus einem elektrisch isolierenden Material kann aus einem keramischen Material hergestellt sein.

Unter einem Teilchen im Sinne der vorliegenden Erfindung sind insbesondere elektrisch leitfähige Teilchen zu verstehen, wie beispielsweise Ruß- oder Staubpartikel.

Unter Messelektroden sind im Rahmen der vorliegenden Erfindung Elektroden zu verstehen, die für eine Strom-Spannungsmessung geeignet sind.

Unter einer Strom-Spannungsmessung ist im Rahmen der vorliegenden Erfindung eine Messung zu verstehen, bei der entweder an die Messelektroden eine bestimmte elektrische Spannung angelegt wird und ein elektrischer Stromfluss zwischen den Messelektroden gemessen wird oder an die Messelektroden ein elektrischer Strom angelegt wird und eine elektrische Spannung zwischen den Messelektroden gemessen wird. Eine Strom-Spannungsmessung kann insbesondere eine Widerstandsmessung sein, wobei ein Widerstand durch die Messelektroden gemessen werden kann. Es kann beispielsweise eine spannungsgesteuerte oder spannungsgeregelte Messung und/oder eine stromgesteuerte und/oder stromgeregelte Messung erfolgen. Das Anlegen des Stroms und/oder der Spannung kann in Form eines kontinuierlichen Signals und/oder auch in Form eines gepulsten Signals erfolgen. So können beispielsweise eine Gleichspannung und/oder ein Gleichstrom angelegt werden und eine Stromantwort bzw. eine Spannungsantwort erfasst werden. Alternativ können eine gepulste Spannung und/oder ein gepulster Strom angelegt werden und eine Stromantwort bzw. eine Spannungsantwort erfasst werden.

Unter Interdigitalelektroden sind im Rahmen der vorliegenden Erfindung Elektroden zu verstehen, die so angeordnet sind, dass sie ineinander eingreifen, insbesondere kammförmig ineinander eingreifen.

Unter einem elektrisch isolierenden Material ist im Rahmen der vorliegenden Erfindung jedes Material zu verstehen, das geeignet ist, einen Stromfluss zu verhindern. Insbesondere werden im Rahmen der vorliegenden Erfindung elektrisch isolierende Materialien in Form einer Keramik verstanden. Insbesondere können dabei Silizium- und/oder Aluminiumoxid und/oder Zirkoniumoxid verwendet werden.

Unter einer Schicht ist im Rahmen der vorliegenden Erfindung eine einheitliche Masse mit flächenhafter Ausdehnung mit einer gewissen Höhe zu verstehen, die sich auf, unter oder zwischen anderen Bauteilen befinden kann.

Ein Grundgedanke der vorliegenden Erfindung ist, einen Verbindungsbereich zwischen den Zuleitungen und den Messelektroden nicht mit einer keramischen isolierenden Schicht abzudecken, sondern diesen frei zu lassen. Um jedoch keine unerwünschte Ablagerung von Teilchen im Bereich der Zuleitung zu haben, muss die Zuleitung mit Ausnahme des Verbindungsbereichs vollständig von einer keramischen Isolationsschicht abgedeckt werden. Der Verbindungsbereich zwischen der Zuleitung und den Messelektroden ist daher näher im Bereich der aktiven Elektrodenfläche angesiedelt. Dadurch kann weniger Feuchte zwischen der keramischen isolierenden Schicht und den Zuleitungen eindringen.

Ein weiterer Vorteil dieses Aufbaus ist, dass während der Herstellung nun keine dicke Platinstruktur mehr überdruckt werden muss und somit das Auftreten von beispielsweise Pinholes, die durch Lufteinschlüsse beim Überdrucken entstehen können, vermieden werden kann. Neben dem geänderten Design der Messelektroden und der Zuleitungen ist im Elektrodenzellendesign eine weitere Optimierung eingeflossen, die dadurch realisiert wird, dass die unter der Messelektrode befindliche keramische Schicht verkürzt wird, so dass der bisherige Stoß ebenfalls nicht mehr überdruckt werden muss. Dies dient ebenfalls der Vermeidung von prozesstechnischen Schwierigkeiten, wie beispielsweise der Bildung von Pinholes oder Rissen.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
- Figur 1: eine Querschnittsansicht entlang einer Längsrichtung eines Teils eines erfindungsgemäßen Sensors zur Detektion von Teilchen und
- Figur 2: eine Draufsicht auf einen Teil des erfindungsgemäßen Sensors zur Detektion von Teilchen.

### Ausführungsformen der Erfindung

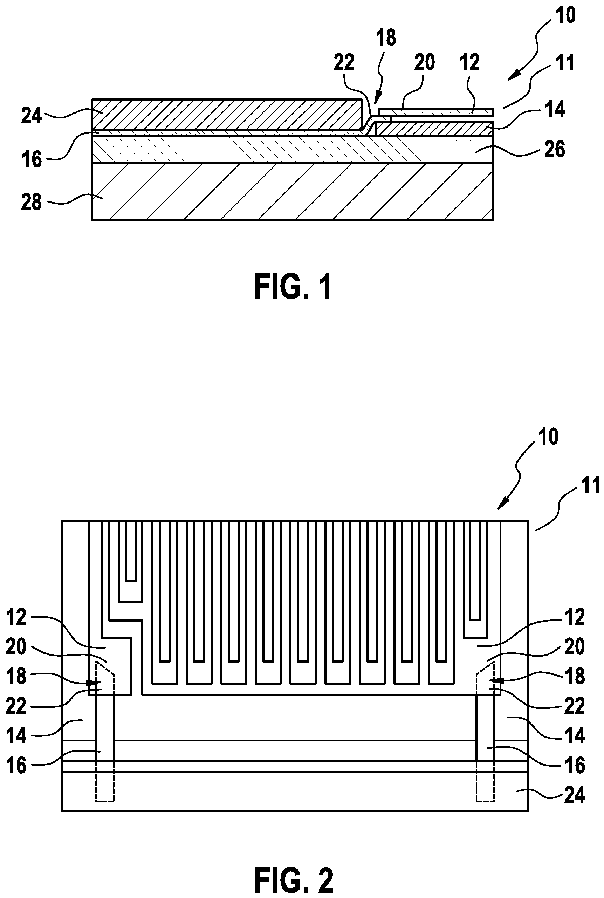

Figur 1 zeigt eine Querschnittsansicht entlang einer Längsrichtung eines Teils eines Sensors 10 zur Detektion von Teilchen, insbesondere von Rußpartikeln in einem Gasstrom, wie beispielsweise einem Abgasstrom einer Brennkraftmaschine, der zum Einbau in einem Abgasstrang eines Kraftfahrzeugs dient. Beispielsweise ist der Sensor 10 als Rußsensor ausgebildet und bevorzugt stromabwärts eines Rußpartikelfilters eines Kraftfahrzeugs mit einem Dieselverbrennungsmotor angeordnet. Genauer zeigt Figur 1 eine Querschnittsansicht entlang einer Längsrichtung einer Sensor- oder Elektrodenzelle 11 des Sensors 10.

Der Sensor 10 bzw. die Sensorzelle 11 umfasst zwei Messelektroden 12. Die Messelektroden 12 sind auf einer ersten Schicht 14 aus einem elektrisch isolierenden Material angeordnet. Alternativ könnte die erste Schicht 14 aus einem elektrisch leitfähigen Material hergestellt sein, wie beispielsweise einem dotierten Material mit einer geringen Leitfähigkeit bei höheren Temperaturen. Die erste Schicht 14 ist beispielsweise aus einem keramischen Material hergestellt, wie beispielsweise Siliziumoxid und/oder Aluminiumoxid und/oder Zirkoniumoxid. Die Messelektroden 12 können auf der ersten Schicht 14 aus einem elektrisch isolierenden oder leitfähigen Material insbesondere als Interdigitalelektroden angeordnet sein. Der Sensor 10 bzw. die Elektrodenzelle 11 umfasst weiterhin mindestens zwei Zuleitungen 16. Jeweils eine Zuleitung 16 ist einer der Messelektroden 12 zugeordnet. Die Zuleitungen 16 sind mit den Messelektroden 12 elektrisch verbunden. Zu diesem Zweck ist ein Verbindungsbereich 18 vorgesehen. Der Verbindungsbereich 18 wird von einem hinteren Abschnitt 20 der Messelektroden 12 und einem vorderen Abschnitt 22 der Zuleitungen 16 gebildet. Der hintere Abschnitt 20 und der vordere Abschnitt 22 überlappen dabei. Der Verbindungsbereich 18 ist entsprechend derjenige Bereich, in dem sich die Zuleitungen 16 und die Messelektroden 12 berühren.

Die Zuleitungen 16 sind von mindestens einer zweiten Schicht 24 aus einem elektrisch isolierenden Material derart bedeckt, dass der Verbindungsbereich 18 von der zweiten Schicht 24 aus einem elektrisch isolierenden Material frei gelassen ist. Mit anderen Worten bedeckt die zweite Schicht 24 aus einem elektrisch isolierenden Material die Zuleitungen 16 vollständig mit Ausnahme des Verbindungsbereichs 18. An dieser Stelle wird explizit betont, dass die zweite Schicht 24 aus einem elektrisch isolierenden Material wiederum selbst aus mehreren Schichten aufgebaut sein kann oder mehrere zweite Schichten 24 aus einem elektrisch isolierenden Material in der beschriebenen Weise auf den Zuleitungen 16 aufgebracht sein können. Die zweite Schicht 24 aus einem elektrisch isolierenden Material kann beispielsweise aus einem keramischen Material hergestellt, wie beispielsweise Siliziumoxid und/oder Aluminiumoxid und/oder Zirkoniumoxid.

Die erste Schicht 14 aus einem isolierenden Material ist wiederum auf einer dritten Schicht 26 aus einem elektrisch isolierenden Material angeordnet. Die dritte Schicht 26 aus einem elektrisch isolierenden Material kann beispielsweise aus einem keramischen Material hergestellt, wie beispielsweise Siliziumoxid und/oder Aluminiumoxid und/oder Zirkoniumoxid. Auf dieser dritten Schicht 26 aus einem elektrisch isolierenden Material sind die Zuleitungen 16 angeordnet. Die Zuleitungen 16 sind dabei zwischen der zweiten Schicht 24 aus einem elektrisch isolierenden Material und der dritten Schicht 26 aus einem elektrisch isolierenden Material eingebettet. Die dritte Schicht aus einem elektrisch isolierenden Material 26 ist wiederum auf einem Trägersubstrat 28 angeordnet. Das Trägersubstrat 28 kann ebenfalls aus einem elektrisch isolierenden Material hergestellt sein.

Figur 2 zeigt eine Draufsicht auf einen Teil des Sensors 10. Genauer zeigt Figur 2 eine Draufsicht auf die Elektrodenzelle 11 des Sensors 10. Zu erkennen sind die zwei Messelektroden 12, die vorderen Abschnitte 22 der Zuleitungen 16, die auf der ersten Schicht 14 aus einem elektrisch isolierenden oder leitfähigen Material angeordnet sind, und der Verbindungsbereich 18. Zu erkennen ist weiterhin, dass die zweite Schicht 24 aus einem elektrisch isolierenden Material nicht in dem Verbindungsbereich 18 angeordnet ist. Des Weiteren ist zu erkennen, dass die Messelektroden 12 mit ihrem hinteren Abschnitt 20 auf dem vorderen Abschnitt 22 der Zuleitungen 16 angeordnet sind. Dieser Aufbau kann derart hergestellt werden, dass die dritte Schicht 26 aus einem elektrisch isolierenden Material auf das Trägersubstrat 28 gedruckt wird. Anschließend wird die erste Schicht 14 aus einem elektrisch isolierenden oder leitfähigen Material auf die dritte Schicht 26 aus einem elektrisch isolierenden Material gedruckt. Schließlich werden die Zuleitungen 16 auf die dritte Schicht 26 aus einem elektrisch isolierenden Material so gedruckt, dass ihr vorderer Abschnitt 22 auf der ersten Schicht 14 aus einem elektrisch isolierenden oder leitfähigen Material angeordnet ist. Anschließend werden die Messelektroden 12 derart auf die erste Schicht 14 aus einem elektrisch isolierenden oder leitfähigen Material gedruckt, dass ihr hinterer Abschnitt 20 auf dem vorderen Abschnitt 22 der Zuleitungen 16 aufgebracht ist. Anschließend wird die zweite Schicht 24 aus einem elektrisch isolierenden Material auf die Zuleitungen 16 so aufgedruckt, dass der Verbindungsbereich 18 frei bleibt. Das Aufdrucken der jeweiligen Bauteile des Sensors 10 kann in an sich bekannter Weise mittels Pasten erfolgen, wie beispielsweise im Siebdruckverfahren.

Insbesondere aus Figur 1 ist zu erkennen, dass durch das Nicht-Überdecken des Verbindungsbereichs 18 mit der zweiten Schicht 24 aus einem elektrisch isolierenden Material weniger Feuchte zwischen die Zuleitungen 16 und die zweite Schicht 24 aus einem elektrisch isolierenden Material eindringen kann.

## Patentansprüche

1. Sensor (10) zur Detektion von Teilchen, insbesondere von Rußpartikeln, umfassend mindestens zwei Messelektroden (12), die auf einer ersten Schicht (14) aus einem elektrisch isolierenden oder leitenden Material angeordnet sind, und mindestens zwei Zuleitungen (16) zu den Messelektroden (12), wobei die Zuleitungen mit den Messelektroden (12) jeweils in einem Verbindungsbereich (18) verbunden sind, der von einem hinteren Abschnitt (20) der Messelektroden (12) und einem vorderen Abschnitt (22) der Zuleitungen (16) gebildet wird, wobei der hintere Abschnitt (20) und der vordere Abschnitt (22) überlappen, **dadurch gekennzeichnet, dass** die Zuleitungen (16) von mindestens einer zweiten Schicht (24) aus einem elektrisch isolierenden Material derart bedeckt sind, dass der Verbindungsbereich (18) von der zweiten Schicht (24) aus einem elektrisch isolierenden Material freigelassen ist.

2. Sensor (10) nach dem vorhergehenden Anspruch, wobei die erste Schicht (14) aus einem elektrisch isolierenden oder leitenden Material und/oder die zweite Schicht (24) aus einem elektrisch isolierenden Material zumindest teilweise aus einem keramischen Material hergestellt sind.

3. Sensor (10) nach einem der vorhergehenden Ansprüche, wobei die Zuleitungen (16) mit Ausnahme des Verbindungsbereichs (18) vollständig von der zweiten Schicht (24) aus einem elektrisch isolierenden Material bedeckt sind.

4. Sensor (10) nach einem der vorhergehenden Ansprüche, wobei der Verbindungsbereich (18) auf der ersten Schicht (14) aus einem elektrisch isolierenden oder leitenden Material angeordnet ist.

5. Sensor (10) nach dem vorhergehenden Anspruch, wobei der Abschnitt (22) der Zuleitungen auf der ersten Schicht (14) aus einem elektrisch isolierenden oder leitenden Material angeordnet ist und der Abschnitt (20) der Messelektroden (12) auf dem Abschnitt (22) der Zuleitungen (16) angeordnet ist.

6. Sensor (10) nach einem der vorhergehenden Ansprüche, wobei die Zuleitungen (16) zumindest teilweise auf einer dritten Schicht (26) aus einem elektrisch isolierenden Material angeordnet sind.

7. Sensor (10) nach dem vorhergehenden Anspruch, wobei die erste Schicht (14) aus einem elektrisch isolierenden Material auf der dritten Schicht (26) aus einem elektrisch isolierenden Material angeordnet ist.

8. Sensor (10) nach einem der beiden vorhergehenden Ansprüche, wobei die Zuleitungen (16) zwischen der zweiten Schicht (24) aus einem elektrisch isolierenden Material und der dritten Schicht (26) aus einem elektrisch isolierenden Material eingebettet sind.

## Claims

1. Sensor (10) for detecting particles, in particular soot particles, comprising at least two measurement electrodes (12) arranged on a first layer (14) composed of an electrically insulating or conducting material, and at least two supply lines (16) to the measurement electrodes (12), wherein the supply lines are connected to the measurement electrodes (12) in each case in a connection region (18) formed by a rear section (20) of the measurement electrodes (12) and a front section (22) of the supply lines (16), wherein the rear section (20) and the front section (22) overlap, **characterized in that** the supply lines (16) are covered by at least one second layer (24) composed of an electrically insulating material in such a way that the connection region (18) is kept free of the second layer (24) composed of an electrically insulating material.

2. Sensor (10) according to the preceding claim, wherein the first layer (14) composed of an electrically insulating or conducting material and/or the second layer (24) composed of an electrically insulating material are/is produced at least partly from a ceramic material.

3. Sensor (10) according to either of the preceding claims, wherein the supply lines (16), with the exception of the connection region (18), are completely covered by the second layer (24) composed of an electrically insulating material.

4. Sensor (10) according to any of the preceding claims, wherein the connection region (18) is arranged on the first layer (14) composed of an electrically insulating or conducting material.

5. Sensor (10) according to the preceding claim, wherein the section (22) of the supply lines is arranged on the first layer (14) composed of an electrically insulating or conducting material and the section (20) of the measurement electrodes (12) is arranged on the section (22) of the supply lines (16).

6. Sensor (10) according to any of the preceding claims, wherein the supply lines (16) are arranged at least partly on a third layer (26) composed of an electrically insulating material.

7. Sensor (10) according to the preceding claim, wherein the first layer (14) composed of an electrically insulating material is arranged on the third layer (26) composed of an electrically insulating material.

8. Sensor (10) according to either of the two preceding claims, wherein the supply lines (16) are embedded between the second layer (24) composed of an electrically insulating material and the third layer (26) composed of an electrically insulating material.

## Revendications

1. Capteur (10) destiné à détecter des particules, en particulier des particules de suie, le capteur comprenant au moins deux électrodes de mesure (12), qui sont disposées sur une première couche (14) de matériau électriquement isolant ou conducteur, et au moins deux lignes d'alimentation (16) menant aux électrodes de mesure (12), les lignes d'alimentations étant reliées à chacune des électrodes de mesure (12) dans une région de liaison (18) qui est formée par une partie arrière (20) des électrodes de mesure (12) et une partie avant (22) des lignes d'alimentation (16), la partie arrière (20) et la partie avant (22) se chevauchent, **caractérisé en ce que** les lignes d'alimentation (16) sont recouvertes d'au moins une deuxième couche (24) de matériau électriquement isolant de manière à laisser libre la partie de liaison (18) de la deuxième couche (24) de matériau électriquement isolant.

2. Capteur (10) selon la revendication précédente, la première couche (14) de matériau électriquement isolant ou conducteur et/ou la deuxième couche (24) de matériau électriquement isolant étant au moins partiellement en un matériau céramique.

3. Capteur (10) selon l'une des revendications précédentes, les lignes d'alimentation (16), à l'exception de la région de liaison (18), étant complètement recouvertes par la deuxième couche (24) de matériau électriquement isolant.

4. Capteur (10) selon l'une des revendications précédentes, la région de liaison (18) étant disposée sur la première couche (14) de matériau électriquement isolant ou conducteur.

5. Capteur (10) selon la revendication précédente, la partie (22) des lignes d'alimentation étant disposée sur la première couche (14) de matériau électriquement isolant ou conducteur et la partie (20) des électrodes de mesure (12) étant disposée sur la partie (22) des lignes d'alimentation (16).

6. Capteur (10) selon l'une des revendications précédentes, les lignes d'alimentation (16) étant au moins partiellement disposées sur une troisième couche (26) de matériau électriquement isolant.

7. Capteur (10) selon la revendication précédente, la première couche (14) de matériau électriquement isolant étant disposée sur la troisième couche (26) de matériau électriquement isolant.

8. Capteur (10) selon l'une des deux revendications précédentes, les lignes d'alimentation (16) étant incorporées entre la deuxième couche (24) de matériau électriquement isolant et la troisième couche (26) de matériau électriquement isolant.
